# EUROPÄISCHE PATENTANMELDUNG

(11) **EP 1 747 744 A1**
(43) Veröffentlichungstag der Anmeldung: **31.01.2007**
(21) Anmeldenummer: 06014628.9
(22) Anmeldetag: 14.07.2006
(51) Int. Cl.: A47J 37/04

(54) **Drehspiessgarvorrichtung**

(30) Priorität: 27.07.2005 DE 202005011792 U; 13.09.2005 DE 102005043544; 06.12.2005 DE 202005019057 U
(71) Anmelder: Özdil, Ferhat, 91438 Bad Windsheim (DE)
(72) Erfinder: Özdil, Ferhat, 91438 Bad Windsheim (DE)
(74) Vertreter: Tergau & Pohl Patentanwälte

(57) **Zusammenfassung**

Es wird eine Drehspießgarvorrichtung (1,1',1"), insbesondere eine Dönergarvorrichtung, angegeben, die einen vertikal ausgerichteten, antreibbaren Drehspieß (3) zur Aufnahme des zu garenden Fleisches und einen seitlich des Drehspießes (3) angeordneten Grill (2) zur Hitzeeinbringung in das sich am Drehspieß (3) drehende Fleisch aufweist. Dabei ist vorgesehen, dass dem Grill (2) gegenüberliegend ein hitzebeständiges Schutzglas (5) angeordnet ist. Durch diese Maßnahme kann das sich am Drehspieß (3) drehende Fleisch Energie sparend gegart werden.

## Beschreibung

Die Erfindung betrifft eine Drehspießgarvorrichtung, insbesondere eine Dönergarvorrichtung, mit einem vertikal ausgerichteten, antreibbaren Drehspieß zur Aufnahme des zu garenden Fleisches und mit einem seitlich des Drehspießes angeordneten Grill zur Hitzeeinbringung in das sich am Drehspieß drehende Fleisch.

Mit einer derartigen Drehspießgarvorrichtung wird eine sich am Drehspieß drehende Fleischmasse durch die Hitzeeinwirkung des Grills von außen gegart. Das gegarte Fleisch wird mittels eines Messers oder einer Schneidvorrichtung frisch vom äußeren Rand der Fleischmasse in Stücken abgeschnitten und beispielsweise mit Gewürzen sowie mit Salat- oder Gemüseteilen in einem Fladenbrot als Schnellgericht zum Verzehr angeboten. In Deutschland ist dieses Schnellgericht beispielsweise unter dem Namen Döner oder Döner Kebab bekannt. Mit einer anderen Zusammensetzung der Fleischmasse ist diesem Gericht auch das in Deutschland unter dem Namen Gyros bekannte Fleischgericht verwandt.

Eine Drehspießgarvorrichtung der genannten Art wird häufig in lmbiss-Ständen eingesetzt. Als Grill wird meist ein mit Gas oder mit elektrischem Strom betriebener Grill eingesetzt, der seine Hitze nach vome auf die sich am Drehspieß befindliche Fleischmasse richtet. Um einen einfachen und raschen Zugriff auf die sich drehende Fleischmasse zu ermöglichen, ist die Drehspießgarvorrichtung zum Bedienungspersonal hin offen.

Es ist Aufgabe der Erfindung, eine Drehspießgarvorrichtung der eingangs genannten Art anzugeben, die das am Drehspieß befindliche Fleisch möglichst Energie sparend gart.

Diese Aufgabe wird für eine Drehspießgarvorrichtung mit den Merkmalen des Oberbegriffs des Anspruchs 1 erfindungsgemäß dadurch gelöst, dass dem Grill gegenüberliegend ein hitzebeständiges Schutzglas angeordnet ist.

Die Erfindung geht dabei von der Überlegung aus, dass die von dem Grill nach vorne gerichtete Hitze, sofern sie durch das Fleisch nicht absorbiert wird, ungehindert entweicht. Insofern wird ein großer Teil der für die Drehspießgarvorrichtung eingesetzten Energie letztlich dafür verwendet, die Umgebung aufzuheizen. In einem weiteren Schritt geht die Erfindung von der Überlegung aus, dass sich die zum Garen des Fleisches notwendige Energie verringern lässt, wenn der Anteil der in die Umgebung durch Abstrahlung oder Abströmung abgegebenen Hitze verringert wird. Dies kann dadurch geschehen, dass dem Grill gegenüberliegend ein hitzebeständiges Schutzglas eingesetzt wird. Durch ein derartiges Schutzglas wird der Raum um den Drehspieß gegenüber der Umgebung zumindest teilweise abgeschirmt. Folglich wird erzeugte Hitze, die bislang entweder durch Strahlung oder durch Konvektionsströmung an die Umgebung abgeleitet wird, im Drehspießraum zurückgehalten und steht insofern zum Garen des Fleisches zur Verfügung. Durch die Verwendung des hitzebeständigen Schutzglases wird in einfacher Art und Weise erreicht, dass das sich am Drehspieß drehende Fleisch rascher gart. Umgekehrt lässt sich gegenüber einer herkömmlichen Drehspießgarvorrichtung derselbe Garzustand mit weniger Energieaufwand erreichen.

Die Erfindung bietet neben der Energieeinsparung weiter den Vorteil , dass das Bedienungspersonal vor direkter Hitzeeinwirkung, sei es durch Strahlung oder durch Konvektion, besser geschützt ist.

Es ist zum Abschneiden der Fleischmasse vorteilhaft, wenn das Schutzglas transparent ist. Dies ist jedoch für die Erfindung nicht zwingend erforderlich. Der Begriff Schutzglas ist nicht einschränkend auf reines Glas zu verstehen, sondern bezieht vorliegend insbesondere auch eine Glaskeramik, Verbundglas oder beschichtetes Glas mit ein.

In einer vorteilhaften Ausgestaltung der Erfindung wird als Schutzglas ein die Hitze reflektierendes Glas eingesetzt. Ein derartiges Glas wirft einen Teil der abgestrahlten Hitze durch Reflektion zurück. Hierdurch wird ein die Drehspießgarvorrichtung bedienende Mitarbeiter weiter vor Hitze geschützt. Da ein Teil der abgestrahlten Hitze von dem reflektierenden Glas zurückgeworfen wird, wird die Energieeinsparung weiter verbessert. Zudem lässt sich hierdurch erreichen, dass die sich am Drehspieß befindliche Fleischmasse rundum und nicht nur auf der dem Grill zugewandten Seite gegart wird.

Vorteilhafterweise weist das Schutzglas eine parallel zur Längsachse des Drehspießes verlaufende Ausnehmung auf. Diese Variante bietet den Vorteil, dass das gare Fleisch von der sich drehenden Fleischmasse ohne Abnahme des Schutzglases geschnitten werden kann. Hierzu braucht lediglich das entsprechende Messer oder die entsprechende Schneidvorrichtung der Ausnehmung entlang geführt werden. Bei einer entsprechenden Breite der Ausnehmung ist ein leichtes und unproblematisches Abschneiden der garen Fleischstücke möglich.

In einer zweckdienlichen Ausgestaltung ist hierbei in die Ausnehmung eine zu öffnende Tür, insbesondere aus hitzebeständigem und/oder hitzereflektierendem Glas, eingesetzt. Gegenüber einer offenen Ausnehmung entweicht durch die geschlossene Tür ein sehr viel geringerer Anteil an Wärme. Somit wird die Energieeinsparung oder die Reflektierung von Hitze auf das zu garende Fleisch weiter verbessert. Zum Abschneiden der garen Fleischstücke von der sich drehenden Fleischmasse wird die Tür geöffnet. Somit entweicht durch die Ausnehmung Wärme nur dann, wenn Fleisch abgeschnitten wird.

Die zu öffnenden Tür kann als eine Schiebetür oder als eine herausnehmbare Klappe ausgestaltet sein. In einer vorteilhaften Ausgestaltung ist die Tür Mittels Scharnieren schwenkbar an dem Schutzglas befestigt. Dies erlaubt insbesondere ein einhändiges Öffnen der Tür, was zum Abschneiden der Fleischstücke von Vorteil ist, da ggf. in einer Hand bereits das Schneidwerkzeug bzw. Messer gehalten wird.

Zweckmäßigerweise ist die Ausnehmung zur Aufnahme und Führung einer elektrischen Schneidvorrichtung ausgebildet. Hierzu sind beispielsweise Befestigungsmittel und entsprechende Aufnahme- und/oder Führungselemente vorgesehen, mit denen die elektrische Schneidvorrichtung befestigt bzw. geführt werden kann. Zum Abschneiden von Fleischstücken von der sich am Drehspieß befindlichen Fleischmasse wird die elektrische Schneidvorrichtung dann einfach den Führungsmitteln entlang gezogen.

In einer weiteren zweckmäßigen Ausgestaltung ist das Schutzglas im Wesentlichen halbrund ausgeführt und umläuft somit teilweise den Drehspieß. Hierdurch kann gemeinsam mit dem seitlich angeordneten Grill ein umlaufender Schutz für den Drehspieß erzielt werden. Aus dem abgeschlossenen Drehspießraum kann Hitze - beispielsweise durch Konvektion - nur noch im Wesentlichen nach oben entweichen.

Um ein rasches Wechseln des Drehspießes mit daran befindlicher Fleischmasse zu ermöglichen, ist das Schutzglas vorteilhafterweise schwenkbar an dem Grill montiert.

Da die sich am Drehspieß befindliche Fleischmasse von außen nach innen abgeschnitten wird, verringert sich mit abnehmender Fleischmasse deren Durchmesser. Um weiter in einfacher Art und Weise Fleischstücke abschneiden zu können, ist das Schutzglas vorteilhafterweise bezüglich des Drehspießes abstandsvariabel montiert. Das Schutzglas kann somit der abnehmenden Fleischmasse nachgeführt werden.

In einer weiteren vorteilhaften Ausgestaltung ist das Schutzglas durch eine Anzahl horizontal ausgerichteter Langlöcher abstandsvariabel an dem Grill befestigt. Durch Lockern der durch die Langlöcher geführten Befestigungsmittel, wie beispielsweise Flügelschrauben, ist hierdurch in einfacher Art und Weise ein Nachführen des Schutzglases bei abnehmender Fleischmasse ermöglicht. Sind die Langlöcher zudem bis zum seitlichen Rand des Schutzglases geführt, so kann das Schutzglas durch Lockern der Befestigungsmittel auch einfach dem Grill abgenommen werden, um einen Austausch des Drehspießes vorzunehmen.

Häufig ist der Drehspießgarvorrichtung eine den Drehspieß nach oben abdeckende Lüftungsvorrichtung zugeordnet. Diese dient beispielsweise dem Abführen der von der garenden Fleischmasse aufsteigenden Dämpfe. Hinsichtlich dem Erreichen einer guten Energieeinsparung ist es zweckmäßig, wenn das Schutzglas mit seinem oberen Rand der Lüftungsvorrichtung angeformt ist. Hierdurch wird der Drehspießraum, der oben durch die Lüftungsvorrichtung abgedeckt ist, im Wesentlichen komplett umschlossen.

Weiter zweckdienlich ist es, wenn das Schutzglas mehrteilig ausgebildet ist, wobei die einzelnen Schutzglasteile durch ein Rahmenelement gefasst sind. Somit ist lediglich eine bestimmte Anzahl gleich geformter Einzelteile erforderlich, die ggf. in einem Winkel aneinandergelegt eine gewünschte Form ergeben. So kann beispielsweise eine halbrunde Form durch Aneinanderlegen einer Anzahl gleichartiger Einzelelemente gebildet werden. Die Einzelelemente können selbst gekrümmt oder eben ausgebildet sein. Das Rahmenelement zur Halterung der Einzelelemente des Schutzglases kann insbesondere Führungsschienen, Führungsnuten oder Führungsrillen aufweisen. Auch ist es möglich, die Einzelteile des Schutzglases stumpf an dem Rahmenelement zu befestigen. Die Befestigung kann beispielsweise mittels eines hitzebeständigen Klebers, aber auch durch eine mechanische Verschraubung oder dgl. hergestellt werden.

In einer besonders vorteilhaften Ausgestaltung weist das Schutzglas einen quer zur Längsachse des Drehspießes verschiebbaren Schiebeeinsatz auf, in den die Ausnehmung eingebracht ist. Durch die längs der Drehachse des Drehspießes ausgerichtete Ausnehmung kann das Fleisch leicht von oben nach unten der Fleischmasse abgeschnitten werden. Die seitliche Verschiebbarkeit des Schiebeeinsatzes ermöglicht zudem einen Bewegungsfreiheitsgrad quer zur Längsachse. Auch kann durch die seitliche Verschiebung des Schiebeeinsatzes die Schneidvorrichtung der abnehmenden Fleischmasse nachgeführt werden. Bei halbrunder Ausführung des Schutzglases wird durch seitliche Verschiebung die Ausnehmung zusätzlich näher an der Grill herangeführt.

Der Schiebeeinsatz kann selbst aus Glas gefertigt sein. Er wird in dem Schutzglas beispielsweise mittels Rillen, Nuten oder Schienen geführt. Auch sonstige mechanische Konstruktionen, die eine seitliche Verschiebung des Schiebeeinsatzes entlang des Schutzglases ermöglichen, sind vorstellbar.

Ausführungsbeispiele der Erfindung werden anhand einer Zeichnung näher erläutert. Dabei zeigen:
- Fig. 1: eine Drehspießgarvorrichtung mit einem halbrund ausgeführten Schutzglas, welches zur Befestigung Langlöcher aufweist,
- Fig. 2: eine Drehspießgarvorrichtung mit halbrund ausgeführtem Schutzglas, welches zur Befestigung Drehgelenke aufweist
- Fig. 3: eine Drehspießgarvorrichtung mit einem halbrund gefertigten Schutzglas, in welches ein Schiebeeinsatz eingesetzt ist, und
- Fig. 4: eine Drehspießgarvorrichtung mit einem halbrund gefertigten Schutzglas aus einzelnen Schutzglasteilen, die in einem Rahmenelement gefasst sind.

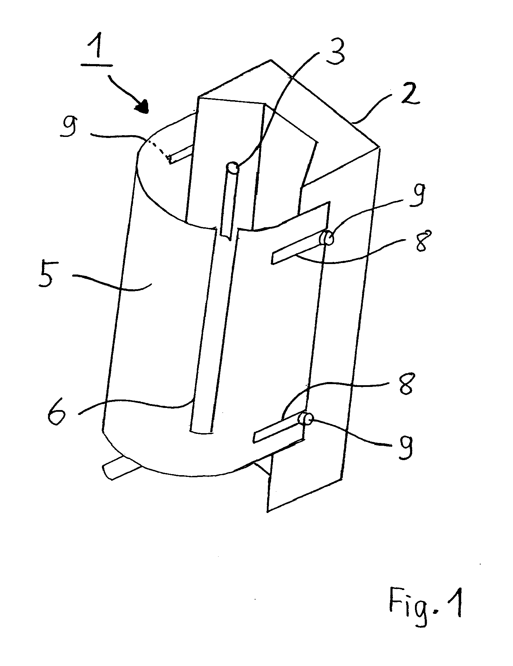

Fig. 1 zeigt eine Drehspießgarvorrichtung 1, die insbesondere als Dönergarvorrichtung eingesetzt werden kann. Die Drehspießgarvorrichtung 1 weist einen Grill 2 auf, der seitlich eines Drehspießes 3 angeordnet ist. Aus Gründen der Übersichtlichkeit ist der Drehspieß 3 nur teilweise dargestellt. Dem Grill 2 gegenüberliegend ist ein halbrund gefertigtes Schutzglas 5 angeordnet. Zum Abschneiden von garen Fleischstücken vom äußeren Rand einer sich am Drehspieß 3 angeordneten Fleischmasse weist das Schutzglas 5 eine Ausnehmung 6 auf, die parallel zur Längsachse des Drehspießes 3 eingebracht ist. In dieser Ausnehmung 6 kann ein Messer oder eine elektrische Schneidvorrichtung in einfacher Art und Weise dem Drehspieß 3 entlang geführt werden.

Infolge des Abschneidens von Fleischstücken vom äußeren Rand der sich am Drehspieß 3 befindlichen Fleischmasse nimmt deren Umfang ab. Das Schutzglas 5 weist an seinen beiden seitlichen Enden jeweils zwei Langlöcher 8 auf, durch welche es mittels Schrauben 9 an dem Grill 2 abstandsvariabel bezüglich des Drehspießes 3 befestigt ist. Nimmt der Umfang der Fleischmasse ab, so kann das Schutzglas 5 durch Lockern der Schrauben 9 näher an den Drehspieß 3 herangeführt werden. In der gewünschten neuen Position wird das Schutzglas 5 dann durch Andrehen der Schrauben 9 an dem Grill 2 wieder fixiert.

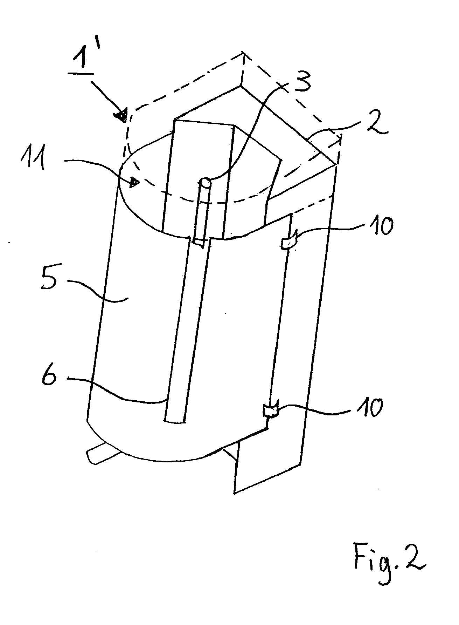

Fig. 2 zeigt eine weitere Drehspießgarvorrichtung 1', die im Wesentlichen baugleich mit der in Fig. 1 gezeigten Drehspießgarvorrichtung 1 ausgeführt ist. Die Drehspießgarvorrichtung 1' unterscheidet sich jedoch dadurch, dass zur Befestigung des Schutzglases 5 an dem Grill 2 seitlich angeordnete Scharniere 10 vorgesehen sind. Hierdurch ist ein einfaches seitliches Wegklappen des Schutzglases 5 ermöglicht, um einen neuen Drehspieß 3 einzusetzen. Weiter ist oberhalb des Drehspießes 3 eine Lüftungsvorrichtung 11 angeordnet, die aufsteigenden Dampf abführt. Das Schutzglas 5 ist an seinem oberen Rand der Lüftungsvorrichtung 11 angeformt, so dass der Drehspießraum nach oben hin im wesentlichen abgedichtet ist.

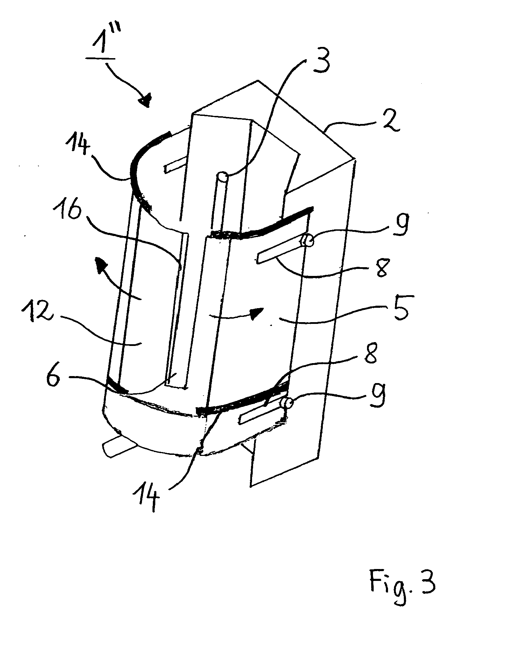

In Fig. 3 ist eine weitere Drehspießgarvorrichtung 1" gezeigt. Wiederum ist dem Grill 2 ein halbrund gefertigtes Schutzglas 5 aufgesetzt. Das Schutzglas 5 ist abstandsvariabel mittels Langlöchern 8 und Schrauben 9 montiert.

Im Unterschied zur Drehspießvorrichtung 1 gemäß Fig. 1 ist dem Schutzglas 5 der in Fig. 3 gezeigten Drehspießgarvorrichtung 1" ein seitlich verschiebbarer Schiebeeinsatz 12 eingesetzt. Der Schiebeeinsatz 12 läuft in an dem Schutzglas 5 montierten Schienen 14 und ist insofern in Richtung der eingezeichneten Pfeile seitlich an dem Schutzglas 5 in beide Richtungen verschiebbar.

In dem Schiebeeinsatz 12 ist weiter die Ausnehmung 6 eingebracht, durch welche Fleischstücke von der sich am Drehspieß 3 befindlichen Fleischmasse abgeschnitten werden können. Zur Führung einer elektrischen Schneidvorrichtung ist entlang der Ausnehmung 6 eine Führungsschiene 16 angebracht.

Die Drehspießgarvorrichtung 1" gemäß Fig. 3 bietet den Vorteil, dass durch ein seitliches Verschieben des Schiebeeinsatzes 12 ein Nachführen der Ausnehmung 6 bei abnehmender Fleischmasse ermöglicht ist. Es ist auch vorstellbar, die Führungskonstruktion für den Schiebeeinsatz 12 so auszugestalten, dass der Schiebeeinsatz 12 von oben in das Schutzglas 5 einführbar ist. Hierdurch wird es möglich, ohne Austausch des Schutzglases 5 einen neuen Drehspieß 3 einzusetzen.

Das Schutzglas 5 in den Drehspießgarvorrichtungen 1,1',1" gemäß Fig. 1,2 und 3 ist als ein Hitze reflektierendes Glas ausgeführt, welches entweder durch seine chemische Zusammensetzung oder durch Beschichtung die von dem Grill 2 ausgestrahlte Hitze zurück in den Drehspießraum reflektiert. Dies führt zu einem schnellen Garen der am Drehspieß 3 angeordneten Fleischmasse bzw. zu einer hohen Energieeinsparung gegenüber herkömmlichen Drehspießgarvorrichtungen. Gleichzeitig wird der die Drehspießgarvorrichtung bedienende Mitarbeiter vor schädlicher Hitzeeinwirkung geschützt.

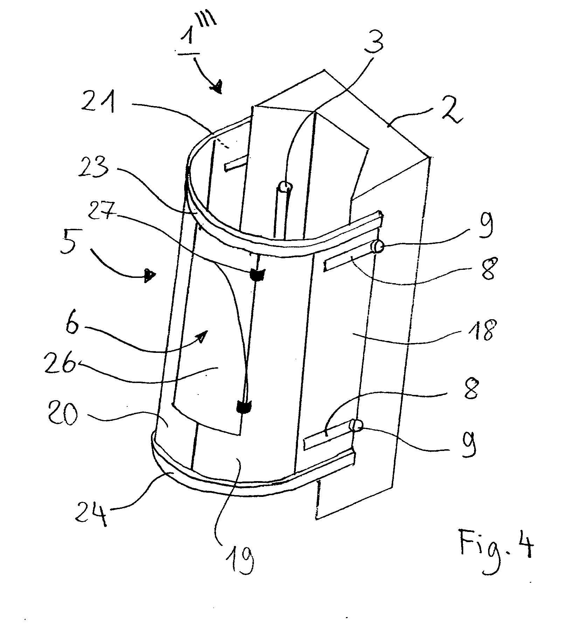

In Fig. 4 ist eine weitere Drehspießgarvorrichtung 1''' gezeigt, wobei das dem Grill 2 aufgesetzte halbrunde Schutzglas 5 aus mehreren Schutzglasteilen zusammengesetzt ist. Das Schutzglas 5 umfasst eine rechte Seitenscheibe 18, eine rechte Frontscheibe 19, eine linke Frontscheibe 20 sowie eine linke Seitenscheibe 21. Die Schutzglasteile 18, 19, 20 und 21 sind in einem oberen halbrunden Rahmenelement 23 und in einem unteren halbrunden Rahmenelement 24 gefasst. Hierzu weisen die Rahmenelemente 23 und 24 entsprechende Aufnahmenuten auf.

Das aus den Schutzglasteilen 18, 19, 20 und 21 zusammengesetzte Schutzglas 5 ist mittels in den Seitenscheiben 18 und 21 eingebrachten Langlöchern 8 und Schrauben 9 abstandsvariabel an den Grill 2 befestigt. Die Seitenscheiben 8 und 21 weisen eine eher gerade Form auf. Die beiden Frontscheiben 19 und 21 sind gekrümmt. Somit ergibt sich eine annähernd halbrunde Ausgestaltung der des Schutzglases 5.

Durch die L-Form sowohl der linken als auch der rechten Frontscheibe 20 bzw. 19 ist in dem Schutzglas 5 zum Abschneiden von garen Fleischstücken im Frontbereich eine relativ große Ausnehmung 6 gebildet. Dies erlaubt ein bequemes Abschneiden von Fleischstücken von dem sich drehenden Drehspieß 3. In die Ausnehmung 6 ist eine Tür 26 aus hitzebeständigem und hitzereflektierendem Glas eingesetzt. Die Tür 6 ist dabei mittels Scharnieren 27 an der rechten Frontscheibe 19 befestigt. Wird kein Fleisch benötigt, so bleibt die Tür 26 geschlossen. Aus dem Innenraum der Drehspießgarvorrichtung 1''' entweicht über die Ausnehmung 6 kaum Wärme. Wird Fleisch benötigt, so kann die Tür 6 leicht geöffnet werden. Über die relativ große Ausnehmung 6 ist ein leichtes Abschneiden von Fleisch möglich.

## Patentansprüche

1. Drehspießgarvorrichtung (1,1',1'',1'''), insbesondere Dönergarvorrichtung, mit einem vertikal ausgerichteten, antreibbaren Drehspieß (3) zur Aufnahme des zu garenden Fleisches und mit einem seitlich des Drehspießes (3) angeordneten Grill (2) zur Hitzeeinbringung in das sich am Drehspieß (3) drehende fleisch,
**dadurch gekennzeichnet,**
**dass** dem Grill (2) gegenüberliegend ein hitzebeständiges Schutzglas (5) angeordnet ist.

2. Drehspießgarvorrichtung (1,1',1'',1''') nach Anspruch 1,
**dadurch gekennzeichnet,**
**dass** als Schutzglas (5) ein die Hitze reflektierendes Glas eingesetzt ist.

3. Drehspießgarvorrichtung (1,1',1'',1''') nach Anspruch 1 oder 2,
**dadurch gekennzeichnet,**
**dass** das Schutzglas (5) eine parallel zur Längsachse des Drehspießes (3) verlaufende Ausnehmung (6) aufweist.

4. Drehspießgarvorrichtung (1,1',1'',1''') nach Anspruch 3,
**dadurch gekennzeichnet,**
**dass** in die Ausnehmung (6) eine zu öffnende Tür (26), insbesondere aus hitzebeständigem und/oder hitzereflektierendem Glas, eingesetzt ist.

5. Drehspießgarvorrichtung (1,1',1'',1''') nach Anspruch 4,
**dadurch gekennzeichnet,**
**dass** die Tür (26) mittels Scharnieren (27) schwenkbar an dem Schutzglas (5) befestigt ist.

6. Drehspießgarvorrichtung (1,1',1'',1''') nach einem der Ansprüche 3 bis 5,
**dadurch gekennzeichnet,**
**dass** die Ausnehmung (6) zur Aufnahme und Führung einer elektrischen Schneidvorrichtung ausgebildet ist.

7. Drehspießgarvorrichtung (1,1',1'',1''') nach einem der vorhergehenden Ansprüche,
**dadurch gekennzeichnet,**
**dass** das Schutzglas (5) im Wesentlichen halbrund ausgeführt ist und den Drehspieß (3) umläuft.

8. Drehspießgarvorrichtung (1,1',1'',1''') nach einem der vorhergehenden Ansprüche,
**dadurch gekennzeichnet,**
**dass** das Schutzglas (5) schwenkbar an dem Grill (2) montiert ist.

9. Drehspießgarvorrichtung (1,1',1'',1''') nach einem der vorhergehenden Ansprüche,
**dadurch gekennzeichnet,**
**dass** das Schutzglas (5) bezüglich des Drehspießes (3) abstandsvariabel montiert ist.

10. Drehspießgarvorrichtung (1,1',1'',1''') nach Anspruch 7,
**dadurch gekennzeichnet,**
**dass** das Schutzglas (5) durch eine Anzahl horizontal ausgerichteter Langlöcher (8) abstandsvariabel an dem Grill (2) befestigt ist.

11. Drehspießgarvorrichtung (1,1',1'',1''') nach einem der vorhergehenden Ansprüche,
**dadurch gekennzeichnet,**
**dass** oberhalb des Drehspießes (3) eine Lüftungsvorrichtung (11) angeordnet ist, und dass das Schutzglas (5) mit seinem oberen Rand der Lüftungsvorrichtung angeformt ist.

12. Drehspießgarvorrichtung (1,1',1'',1''') nach einem der Ansprüche 3 bis 11,
**dadurch gekennzeichnet,**
**dass** das Schutzglas (5) einen quer zur Längsachse des Drehspießes (3) verschiebbaren Schiebeeinsatz (12) aufweist, und dass die Ausnehmung in den Schiebeeinsatz (12) eingebracht ist.

13. Drehspießgarvorrichtung (1,1',1'',1''') nach einem der Ansprüche 3 bis 12,
**dadurch gekennzeichnet,**
**dass** das Schutzglas (5) mehrteilig ausgebildet ist, wobei die einzelnen Schutzglasteile (18-21) durch ein Rahmenelement (23,24) gefasst sind.
